# EUROPEAN PATENT APPLICATION

(11) **EP 1 820 732 A1**
(43) Date of publication of application: **22.08.2007**
(21) Application number: 05787759.9
(22) Date of filing: 27.09.2005
(51) Int. Cl.: B65B 57/00, B26D 7/22, B65B 51/10

(54) **PACKING MACHINE AND PACKING METHOD**

(30) Priority: 10.12.2004 JP 2004357926
(71) Applicant: Tetra Laval Holding & Finance S.A., 1009 Pully (CH)
(72) Inventor: KONNO, Hidetoshi NIHON TETRA PAK K.K.,, Tokyo 102-8544 (JP)
(74) Representative: Haselhorst, Reta
(86) International application number: PCT/JP2005/017756
(87) International publication number: WO 2006/061939

(57) **Abstract**

[PROBLEMS] A packing machine and a packing method which can prevent the knife in a cutter from having adverse effect on induction heating, and control a packing/filling machine by monitoring trouble with the knife and leakage of content due to that trouble. [MEANS FOR SOLVING PROBLEMS] The packing machine, comprising a heat sealer for scaling packing materials to each other, and a cutter for cutting the packing materials by means of a conductive knife, is further provided with a means for detecting an output from an induction heater generating a high frequency current being applied to a conductive material layer as a monitored phase angle, and a knife monitor for monitoring the cutter based on the detected phase angle data.

## Description

### FIELD OF THE INVENTION

The present invention relates to a packaging machine for preparing paper containers from a packaging material and a packaging method of packaging and filling a liquid food such as juice and milk in the paper containers.

### BACKGROUND OF THE INVENTION

As illustrated in FIGS 3 and 4, the packaging/filling device obtaining paper containers with liquid foods prepares a web-like packaging material 1 with a thermoplastic material sealant layer such as low density polyethylene, a conductive material such as an aluminum foil, and a fiber material supporting material such as a paper laminated; forms the packaging material 1 cylindrically to fill liquid foods therein; holds the cylindrical packaging material from the outside with two sealing jaws 2, 2 in parallel each other and two counter jaws 3, 3 in parallel each other to superpose each other; heats and fuses the thermoplastic material sealant layer by applying a high frequency current supplied by an induction heating device from the sealing jaws to the conductive material while pulling down the packaging material and holding the sealing jaws and the counter jaws; seals the packaging materials to each other with prespecified intervals and cuts the sealing packaging materials with prespecified intervals by a knife 4 to separate the sealing jaws and the counter jaws from the packaging materials for returning upward respectively as illustrated in FIG 4; and then obtains a container 5 falling downward and folds a flap of the container for forming the container to a final shape.

The induction heating device comprises a high-frequency power supply and a matching unit; the high-frequency power supply, for example, converts an AC power source such as 3φ 200V to a DC power source once and then generates high-frequency energy having the frequency range of 100 Hz to several MHz by components such as an electronic tube, a thyristor, a MOSEFET, and an IGBT; and the matching unit matches the high-frequency energy generated in the high-frequency power supply to a voltage and a current demanded by a load coil. In the above filling device, the sealing jaws are corresponding to the coil of the induction heating device.

When magnetic fluxes generated by flowing a high-frequency current into the sealing jaws of the coil is crossed with a conductive layer of a non-aluminum foil conductive material layer of a web-like packaging material layer, a circulation current (eddy current) with a high-frequency is induced in the conductor, which flows in the conductive layer to generate generating heat proportional to a resistance thereof.
There has been proposed a device in which a preferred sealing band is obtained for cutting the sealing band by providing a convex in the sealing jaws of the above sealing device obtains a successful sealing band.(Refer to patent document 1)

The cutting device for cutting the packaging materials sealed with a predetermined interval, heat-seals while holding the materials with the sealing the materials jaws and the counter jaws and then cuts the packaging materials by linearly moving or rotating a knife, as illustrated by the arrow in FIG 4.
Patent document 1: Japanese laid-open publication HEI No. 07-164523

### Problems to be solved by the Invention

The prior art is configured so that the cutter and the induction heater are associated each other for operations thereof. Namely, cutting is conducted by the knife immediately after completion of sealing the materials by heating and cooling. However, when induction heating is conducted with a conductive knife made of metal located near the conductive material layer of the packaging material to be sealed, magnetic fluxes generated from the sealing jaws are crossed the conductive knife and then conditions of the induction heating are disturbed. Consequently, proper seals may not be obtained.

Also, the knife is projected by the trouble of a knife driving unit to remain at a cutting mode. With the knife projected, the generated magnetic fluxes are crossed with the knife, which disturbs outputs of the induction heating and then may provide defective seals. Contents may be leaked from the defective seals by cutting the packaging materials with the knife projected.

The present invention intends to provide the packaging machine and the packaging method that prevents adverse influences to induction heater caused from the knife in the cutter in advance, and also monitors a trouble of the knife and the leakage of contents by the trouble to control the packaging/filling device.

### Means to Solve Problems

The present packaging machine for solving the above problems comprises a heat sealer for laying a lengthy packaging material in which a thermoplastic material sealant layer, a conductive material layer, and the fiber material supporting layer are laminated on a top of another packaging material and sealing the packaging materials to each other at prespecified intervals by applying a high-frequency current from seal jaws to the conductive material layer to heat and fuse the thermoplastic material sealant layer; and a cutter for cutting the sealed packaging materials at the prespecified intervals with the knife; wherein the knife of the cutter is a conductive knife for cutting sealed portions of the packaging materials, and the knife comprises : a phase angle detecting means for detecting outputs from the induction heater for generating a high frequency current to be applied to the conductive material layer as a monitored phase angle; and a knife monitor for monitoring the cutter based on the detected phase angle data.

The packaging method of the present invention comprises the steps of laying a length packaging material in which a thermoplastic material sealant layer, a conductive material layer, and a fiber material supporting layer are laminated on a top of another packaging material; heating and fusing the thermoplastic material sealant layer by applying a high frequency current to the conductive material layer from the seal jaws to seal the packaging material to each other at prespecified intervals with a heat sealer; and sealing the packaging materials at prespecified intervals to each other and cutting packaging materials at the prespecified intervals with a knife of the cutter, the method furthermore comprising the steps of cutting a sealed portion of the packaging materials with a conductive knife of the cutter; detecting outputs from an induction heater for generating a high frequency current to be applied to the conductive material layer as a monitored phase angle; and monitoring the cutter with the knife monitor based on the detected phase angle data.

### Effect of the Invention

The present invention provides advantageous effects because of the actions and operations as described below.
A web-like packaging paternal is prepared in which a thermoplastic material sealant layer made of such materials as polyethylene, polypropylene, and polyester, a conductive material layer made from aluminum foils or the like, a fiber material supporting layer made of such material as paper, and preferably a thermoplastic material outer layer are laminated. This packaging material is processed into a tubular form with a liquid food filled in the tube, and the tubular packaging materials are laid on each other holding the tubular packaging material with a seal jaw and a counter jaw from the outer side. Then, holding the packaging materials with the seal jaw and the counter jaw, the packaging materials are pulled down.

When a magnetic flux generated by flowing a high frequency current by an induction heater to a coil-like seal jaw is crossed by the conductive material layer made form aluminum foils in the web-like packaging material, a high-frequency eddy current is induced, and heat is generated in proportion to a resistance of the conductive material. When the conductive material layer is heated, the thermoplastic material sealant layer is heated and melted. In this heating step, output from an induction heater for generating a high frequency current to be applied to the conductive material layer is detected as a phase angle monitored by a phase angle detecting means.
Output such as an output power and an output current from the induction heater does not largely fluctuate as monitored data, and positional fault of the knife does not occur. Unexpectedly, the phase angle remarkably changes in response to a change in induction heating when the magnetic flux generated from the seal jaw crosses the conductive knife.

In the present invention, the cutter is monitored by a knife monitor based on data for the detected phase angle. Namely, when the phase angle data is abnormal, it is possible to temporally stop operations of the packaging machine and alert an operator of generation of the abnormal state.
When the phase angle data is not abnormal, the packaging materials are sealed to each other at prespecified intervals, and the cutter curs the sealed packaging materials at the prespecified intervals with a knife to provide containers, and a flap portion of the container is folded to process the container to the final form.

### BEST MODE FOR CARRYING OUT THE INVENTION

Embodiments of the present invention are described in detail below with reference to the related drawings.
FIG. 3 is a general block diagram of a packaging and filling system in which a packaging machine and a packaging method according to the present invention can be used.
In this embodiment, a web-like packaging material 1 is fed out from a reef 1a of the web-like material, the web-like material is processed into a tubular form, and a content such as liquid food is filled from a filling pipe 31 in this tubular packaging paternal 1b.
The packaging material is held from the outside with a seal jaw 2 and a counter jaw 3 (not shown) and two edges of the packaging material 1 are laid on each other and sealed to each other at prespecified interval with an induction heater by heating and fusing the thermoplastic material sealant layer. Then, the tubular packaging material 1 is cut with a knife 4 to obtain containers 5, and if necessary, a flat portion of the container is folded to process the container into the final form.

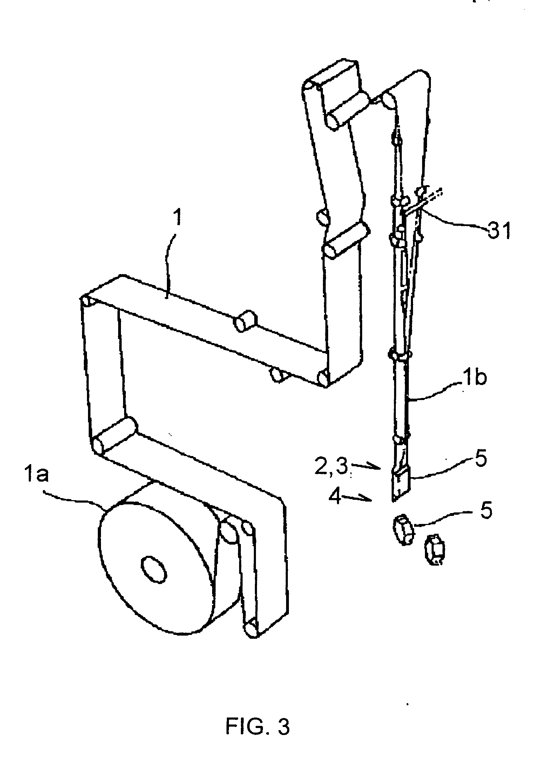

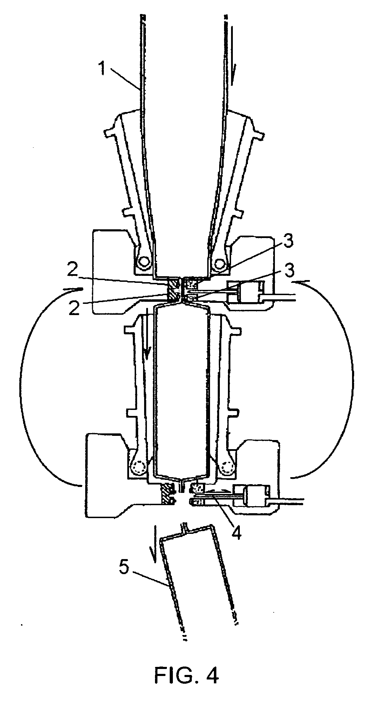

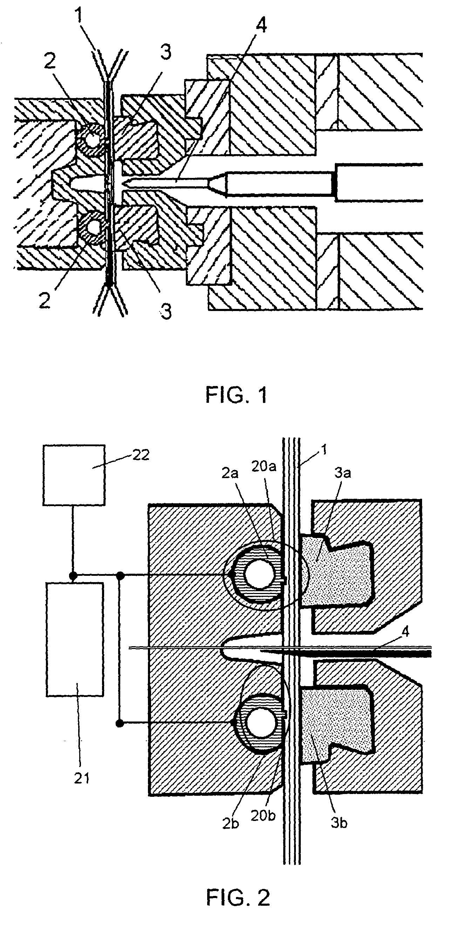

FIG. 1 is a general cross-sectional view illustrating an induction heater and a cutter in one embodiment of the packaging and filling system in which the packaging machine and the packaging method according to the present invention can be used.
In this embodiment, two edges of the tubular packaging material 1 are held by two parallel seal jaws 2, 2 and two parallel counter jaws 3,3 and are laid on each other. Then, a high frequency magnetic flux is generated from the seal jaws to heat the conductive material layer in the packaging material 1 for heating and fusing the thermoplastic material sealant layer. Then the packaging material 1 is cut along the two sealed section with the knife 4.

FIG. 2 is a general cross-sectional view for illustrating operations of an induction heater and a cutter in an embodiment of a packaging and filling system in which the packaging machine and the packaging method can be used.
In this embodiment, the tubular packaging material is held from the outside by the seal jaws 2, 2 and the counter jaws 3,3 arranged in parallel to each other respectively and two edges of the tubular packaging material 1 are laid on each other. Then, high frequency magnetic fields 20a, 20b are generated from the seal jaws 2, 2 by an induction heater 21 to heat the conductive material layer of the packaging material 1, thus the thermoplastic material sealant layer being heated and fused.
In FIG. 2, a position of the knife 4 in the upper half is different from that in the lower half. The upper half of FIG. 2 shows the state in which the knife 4 is at the normal position, namely the state in which the knife is retarded and not present at a position near the packaging material when the induction heating is performed. On the other hand, the lower half of the figure shows the state in which the knife is at an abnormal position, namely the state in which the knife is still remaining at a position for cutting the packaging material due to a failure of a knife driver or for some other reasons when the induction heating is performed.

The present invention is described more specifically with reference to the operating states shown in the upper half and the lower half of FIG. 2.
In the state shown in the upper half of FIG. 2, the induction heater 21 applies high frequency energy to a the seal jaw 2a having a form like a coil. Then a high frequency current flows in the seal jaw 2a and a magnetic field 20a is generated. This magnetic field 20a crosses the aluminum foil conductive layer in the web-like packaging material to induce an eddy current, and this eddy current generates heat.
In contrast, in the state shown in the lower half of FIG. 2, the induction heater 21 applied high frequency energy to the seal jaw 2b having a form like a coil. Then a high frequency current flows in the seal jaw 2b and a magnetic field 20b is generated. However, because the conductive knife 4 is present near the packaging material, the magnetic field covers also the knife 4, and therefore distribution, strength, and other parameters of the magnetic field are different from those in the normal state. It is to be noted that the magnetic fields 20a and 20b shown in the upper half and the lower half of FIG. 2 respectively are shown with simplified forms, and the illustrated forms are different from the actual ones.
Influence of the existence of the knife 4 at a close position over the induction heating remarkably appears as fluctuation of a phase angle of the high frequency energy from the induction heater 21 and the high frequency current. This fluctuation is detected and monitored as a phase angle by a phase angle detector 22.

In this embodiment, whether a knife is preset at the normal position or not is determined based on the detected phase angle data, and the cutter is monitored by a knife monitor (not shown). Namely, when the phase angle data is abnormal, it is possible to take such actions as temporally stopping operations of the packaging machine or alerting an operator of the abnormal state.
As described above, the present invention makes it possible to prevent negative influences of a knife of a cutter over induction heating, and also to accurately control a packaging and filling machine by monitoring any trouble of the knife or leakage of a content due to the trouble.

The present invention is not limited to the embodiments described above, and it is possible to introduce various changes and modifications within the gist of the present invention. Namely the changes and modifications are within the scope of the present invention.

### Applicability of Industrial Purposes

The packaging machine and the packaging method according to the present invention can be applied to preparing paper containers from a packaging material and filling a liquid food such as juice or milk in the paper containers.

### BRIEF DESCRIPTION OF THE DRAWINGS

Fig. 1 is a schematic cross-sectional view of an induction heater and a cutter in an embodiment of a packaging and filling system in which the present invention is applicable;
FIG. 2 is a schematic cross-sectional view for illustrating operations of the induction heater and the cutter in the embodiment of the packaging and filling system in which the present invention is applicable;
Fig. 3 is a schematic of the embodiment of the packaging and filling system in which the present invention is applicable; and
Fig. 4 is a schematic cross-sectional view of an induction heater and a cutter in the embodiment of the packaging and filling system.

### Description of Signs:

- 1:: Packaging material
- 2:: Seal jaw
- 3:: Counter jaw
- 4:: Knife

## Claims

1. A packaging machine comprising:
a heat sealer for laying a lengthy packaging material in which a thermoplastic material sealant layer, a conductive material layer, and a fiber material supporting layer are laminated on a top of another packaging material and sealing the packaging materials to each other at prespecified intervals by applying a high-frequency current from a seal jaw to the conductive material layer to heat and fuse the thermoplastic material sealant layer; and
a cutter for cutting the sealed packaging materials at the prespecified intervals with a knife;
wherein the knife of the cutter is a conductive knife for cutting sealed portions of the packaging materials, and the knife comprises:
a phase angle detecting means for detecting output from a induction heater for generating a high frequency current to be applied to the conductive material layer as a monitored phase angle; and
a knife monitor for monitoring the cutter based on the detected phase angle data.

2. A packaging method comprising the steps of:
laying a lengthy packaging material in which a thermoplastic material sealant layer, a conductive material layer, and a fiber material supporting layer are laminated on a top of another packaging material;
heating and fusing the thermoplastic material sealant layer by applying a high frequency current to the conductive material layer from the seal jaw to seal the packaging materials to each other at prespecified intervals; and
cutting the sealed packaging materials at the prespecified intervals with a knife of the cutter,
the method furthermore comprising the steps of:
cutting a sealed portion of the packaging materials with a conductive knife of the cutter;
detecting output from a induction heater for generating a high frequency current to be applied to the conductive material layer as a monitored phase angle; and
monitoring the cutter with the knife monitor based on the detected phase angle data.
